# EUROPEAN PATENT APPLICATION

(11) **EP 0 826 297 A2**
(43) Date of publication of application: **04.03.1998**
(21) Application number: 97202425.1
(22) Date of filing: 04.08.1997
(51) Int. Cl.: A01D 34/68

(54) **Handgrip for driving handle of a mower**

(30) Priority: 29.08.1996 IT MI960588 U
(71) Applicant: CASTELGARDEN S.P.A., I-31033 Castelfranco Veneto (Treviso ) (IT)
(72) Inventor: Ferrari, Maurizio, 20144 Milano (IT)
(74) Representative: Mittler, Enrico

(57) **Abstract**

Handgrip for a driving handle of a mower, said handle comprising at least a metallic tubolar arm (3) extending from the mower frame (1) and a handgrip (4) made up of a bar segment (6) substantially horizontal with curved lateral extremities (5). Said handgrip has a section with a larger upper part and a narrower lower part comprising at least a recess for accomodating a mower driving lever (7,8), and on said bar handgrip (4) a covering (9,10) is snap-mounted comprising at least a first plastic covering layer (9) elastically deformable with substantially a "C"-shaped cross-section.

## Description

The present invention relates to a handgrip for a driving handle of a mower.

In mowers a driving handle is normally provided which is connected to the mower frame and extends upwards to be gripped by an user in order to let him drive the mower.

The driving handle is generally made up of a metallic bar having one or two parallel arms substantially rectilinear extending from the frame is a direction more or less inclined relative to the ground plane, and a handgrip is provided at the extremity of the arm(s). In the most ergonomic solution, in correspondance of the handgrip the bar is folded into a substantially "U" shape, whose horizontal length and lateral extremities make up the handgrip.

In correspondance of the handgrip, one or more control levers can be provided for, according to the mower type.

Concerning the handle handgrip, several solutions are known.

In a first solution, the driving handle is made up of a varnished or zinc-plated bar of circular cross-section which extends also to the gripping area; said lever or levers come alongside the circular bar, increasing the handgrip overall dimension and making the same scarcely anatomyc.

In a second solution, the handle is still made of a bar of circular cross-section but this is covered, in correspondance of the handgrip, by two rigid plastic half-shells connected to each other by screws and reproducing the section outline of the bar. This solution is even less ergonomic than the previous one, having only a better appearance, and moreover is complex to assemble.

In a third solution, the handle is made up of a bar which may have a circular cross-section or, in correspondance of the handgrip, a squeezed cross-section in its middle part (that is with a substantially "8" profile); the rigid plastic half-shells are not provided for on the bar, whereas plastic protections over-injected and fastened by a click type device on the driving levers are provided for. This solution is not the optimum since, beside the high number of independent parts that must be provided separately and than assembled, can cause the user hands to be pinched between the levers protections and the bar.

Finally a solution is known which provides for the insertion, on the driving handle, in correspondance of the handgrip, of a soft polyuretane bar. This solution requires that on the handgrip and, more in general on the entire handle, additional parts welded in projection would not be provided for.

In view of this state of the art, an object of the present invention is to provide a handgrip for a driving handle of a mower which is not affected by the aforementioned problems, and guarantees a good ergonomics and thus a good comfort, as well as a nice appearance.

According to the present invention, this object is achieved thanks to a handgrip for a driving handle of a mower, said handle comprising at least a metallic tubolar arm extending from the mower frame and a handgrip made up of a bar segment substantially horizontal with curved lateral extremities, characterized in that said handgrip has a section with a larger upper part and a narrower lower part comprising at least a recess for accomodating a mower driving lever, and in that a covering is snapped on to on said handgrip comprising at least a first plastic covering layer elastically deformable with a substantially "C"-shaped cross-section.

Preferably, said first covering layer is made of polypropylene.

Even more preferably, said covering comprises also a second covering layer in soft material over-injected on the first layer in order to form an integral body.

The features and the advantages of the present invention will be apparent by the following detailed description of an embodiment thereof, described by way of a non-limiting example in the annexed drawings,
wherein:
Fig. 1 shows in side view a mower equipped with a driving handle with a handgrip according to the invention;
Fig. 2 is a perspective view of the handle handgrip alone;
Fig. 3 is a sectional view along a vertical plane of the handgrip of Fig. 2, with driving levers in a non working position;
Fig. 4 is a section similar to that of Fig. 3, but with the driving levers in a working position.

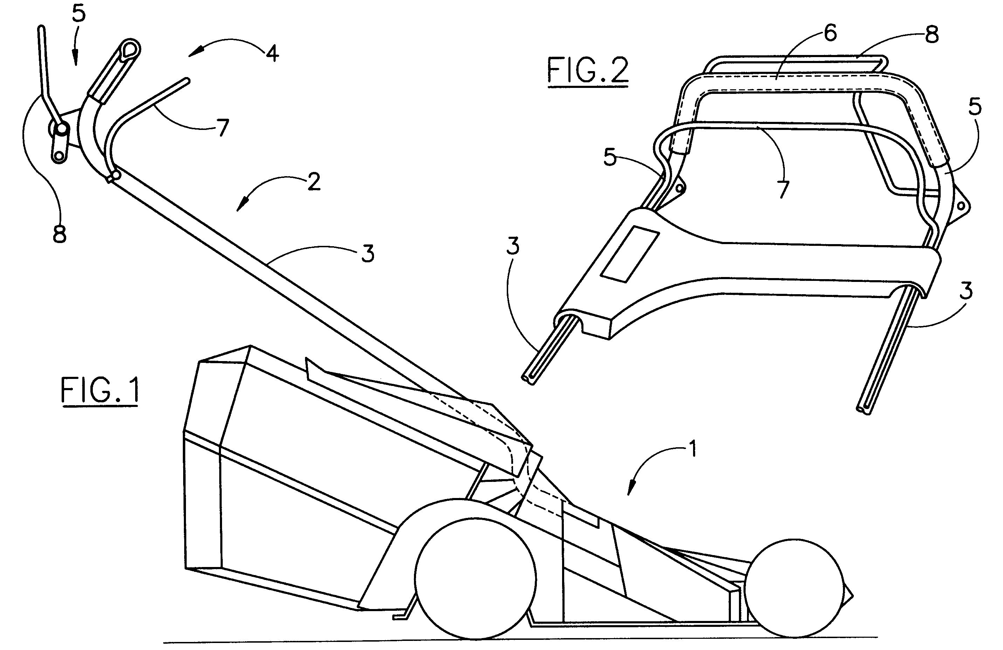

Referring to the drawings, in Fig. 1 a mower is shown in side view. The mower conventionally comprises an engine body or frame 1 from which a driving handle 2 departs, extending in a direction more or less inclined relative to the ground. The driving handle 2 comprises a bar folded in such a way as to have two arms 3 substantially rectilinear that are connected to the frame 1, and a handgrip 4 (that can be seen in perspective in Fig. 2) made of two bar segments 5 substantially orthogonal to the arms 3 and connected by a substantially horizontal bar segment 6. Corresponding to the handgrip 4 two driving levers 7 and 8 are also provided for, one positioned at the front and one at the rear of the handgrip. In the shown example, the front lever 7 represents the driving lever of the brake (necessarily provided for in the case the mower is moved by an internal combustion engine), while the rear lever 8 represents the lever driving the mower traction; the specific function of the front lever and of the rear lever can however be different, particularly the lever driving the traction can be positioned at the front and the one driving the brake can be positioned at the rear.

As one can see, in the example of Fig. 2 the levers 7 and 8 extend substantially for the entire length of the handgrip 4, and are hinged to the handle 2. However, the levers could also not extend for the entire lenght of the handgrip and therefore be both positioned at the front or at the rear.

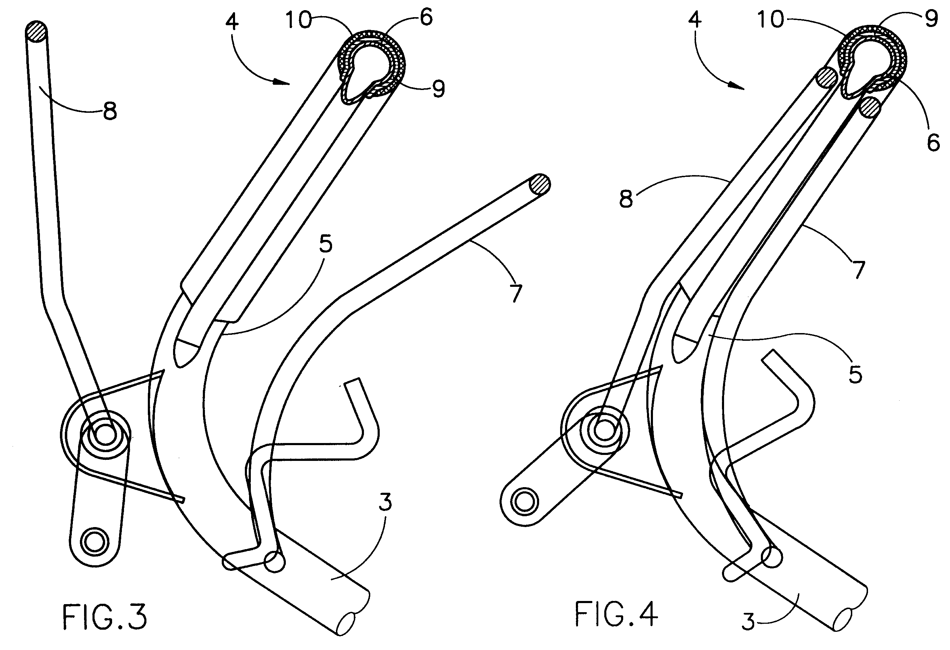

In Fig. 3 and 4 there is shown in detail, in section along a vertical plane, the handgrip 4 of the handle 2, in two different working positions of the driving levers 7 and 8.

As one can see, the bar making up the handle 2, which normally has a circular cross-section, in correspondance of the handgrip 4 is squeezed so that his cross-section has a substantially pear-shaped profile, which is outwardly bigger while inwardly has a reduced overall dimension. This bar squeezing involves the part of the bar making up the segments 5 and the substantially horizontal segment 6.

Moreover, still in correspondance of the handgrip 4, i.e. where the bar is squeezed in the aforementioned way, a first plastic bearing coating 9 with a substantially "C"-shaped cross-section. is snapped on to the bar itself. The material making up the first coating 9 should be substantially rigid, but able of a certain degree of elasticity, so as to allow snapping on to the bar and to prevent covering 9 from rotating on the bar. A material that proved suitable is polypropylene.

Snap coupling simplifies the assembling operations, up to a point that covering 9 can be separately sold as an accessory, and mounted on the driving handle directly by the user.

As shown in Fig. 4, when the levers 7 and 8 are drawn near to the handgrip they almost totally recede inside the handgrip itself, so as not to increase the overall dimension and to improve the anatomicity.

Preferably, in order to make the handgrip grip more comfortable and safe to the user, a soft synthetic covering 10 can be over-injected over the bearing covering 9.

As one can see in Fig. 4, even when the levers 7 and 8 are drawn near to the handgrip the assembly has a substantially circular shape, which improves the ergonomics of the assembly itself. Moreover, thanks to the fact that the driving levers almost totally recede inside the handgrip, the assembly dimensions are proper. Provision of coating 10 reduces the vibrations and also has an anti-sliding function. Moreover, coating 10 can have various coulorings, helping to improve the handgrip esthetics.

The present invention can be applied also to driving handles of different shape from the one shown in the drawings, by way of example comprising only one bar which extends from the mower frame and ends with a properly shaped handgrip, and supplied also with one or more driving levers.

Particularly, in the case that only one driving lever is provided for, the bar could have, in correspondance of the handgrip, a squeezing only on the side where the lever itself is located, so that the lever itself can recede inside the handgrip.

## Claims

1. Handgrip for a driving handle of a mower, said handle comprising at least a metallic tubolar arm (3) extending from the mower frame (1) and a handgrip (4) made up of a bar segment (6) substantially horizontal with curved lateral extremities (5), characterized in that said handgrip has a section with a larger upper part and a narrower lower part comprising at least a recess for accomodating a mower driving lever (7,8), and in that a covering (9,10) is snapped on to said handgrip (4) comprising at least a first plastic covering layer (9) elastically deformable with a substantially "C"-shaped cross-section.

2. Handgrip according to claim 1, characterized in that said first covering layer (9) is made of polypropylene.

3. Handgrip according to claim 2, characterized in that said covering (9,10) further comprises a second covering layer (10) in soft material over-injected on the first covering layer in order to form an integral body.

4. Handgrip according to claim 2 or 3, wherein at least one driving lever (7,8) is hinged to the driving handle (2), characterized in that when said lever is drawn near to the handgrip it almost totally recedes inside said recess.
